(19) **Europäisches Patentamt**
**European Patent Office**
**Office européen des brevets**

(11) **EP 1 087 559 B1**

(12) **EUROPEAN PATENT SPECIFICATION**

(45) Date of publication and mention
of the grant of the patent:
**27.01.2010 Bulletin 2010/04**

(51) Int Cl.:
***H04J 11/00*** *(2006.01)*

(21) Application number: **99923994.0**

(22) Date of filing: **10.06.1999**

(86) International application number:
**PCT/JP1999/003105**

(87) International publication number:
**WO 1999/065173 (16.12.1999 Gazette 1999/50)**

(54) **CANCELLER FOR JAMMING WAVE BY INTERFERENCE**

AUSLÖSCHER FÜR STÖRWELLE MIT INTERFERENZ

DISPOSITIF D'ANNULATION D'UNE ONDE DE BROUILLAGE CREEE PAR DES INTERFERENCES

(84) Designated Contracting States:
**DE FR GB NL SE**

(30) Priority: **10.06.1998 JP 16218998**

(43) Date of publication of application:
**28.03.2001 Bulletin 2001/13**

(73) Proprietor: **NIPPON HOSO KYOKAI**
**Tokyo 150-8001 (JP)**

(72) Inventors:
• **SHIBUYA, K.,**
**NHK Hosogijutsukenkyusyo**
**Setagaya-ku, Tokyo 157-8510 (JP)**
• **IAI, N.**
**NHK Hosogijutsukenkyusyo**
**Setagaya-ku, Tokyo 157-8510 (JP)**

• **IMAMURA, K.,**
**NHK Hosogijutsukenkyusyo**
**Setagaya-ku, Tokyo 157-8510 (JP)**

(74) Representative: **HOFFMANN EITLE**
**Patent- und Rechtsanwälte**
**Arabellastrasse 4**
**81925 München (DE)**

(56) References cited:
**EP-A- 0 801 474     JP-A- 2 249 321**
**JP-A- 3 006 132     JP-A- 8 340 315**
**JP-A- 11 122 156     US-A- 5 444 864**
**US-A- 5 691 978**

• **MASAYUKI TAKADA, "Chijou Digital Housou no Densou Houshiki", GIKEN KOUKAI KOUEN KENKYUU HAPPYOU YOKOUSHUU, 22 May 1998, pages 67-72.**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to a technique for removing or reducing interference at a relay equipment installed in a relay station in digital broadcasting or digital transmission. Particularly, the present invention relates to a technique for canceling interference including interference due to an undesired transmission between a transmitting antenna and a receiving antenna in a relay station in single frequency network (SFN), interference due to multipath, and interference due to a reception of signals from one or transmitting stations which are different from a master station from which a signal is to be received. In the present specification, the above mentioned various kinds of interference are called interference waves for the sake of explanation.

Technical Background

In the present broadcasting wave relay system, the multifrequency network (MFN) in which a receiving frequency is different from a transmitting frequency has been adopted. In this system, even if a signal transmitted from a transmitting antenna of a relay station is received by a receiving antenna of the same relay station, the problem of coupling loop interference does not occur, because the undesired receiving signal is sufficiently attenuated by a reception filter. When the transmitting and receiving are performed on a same frequency, transmitting power of a relay station is limited to low, and moreover a separation type antenna system in which a physical distance between a transmitting antenna and a receiving antenna is sufficiently long is adopted. Therefore, a transmitted radio wave is sufficiently attenuated at the receiving antenna, and the coupling loop interference of the transmitted wave is scarcely occurred.

In the digital terrestrial broadcasting, BST-OFDM (Band Segmented Transmission Quadrature Frequency Division Multiplexing) system would be dominant. This system has resistance to multipath distortion and various services may be carried out, and the SFN may be utilized. Upon introducing the digital terrestrial broadcasting, the digital broadcasting has to utilize vacant channels in order to attain a compatibility with the existing analog broadcasting. However, since the number of vacant channels is small, it would be indispensable to adopt the SFN.

Upon realizing the SFN, the coupling loop interference between a transmitting antenna and a receiving antenna in a non-separation type broadcasting wave relay station would be a problem, and a degradation of transmission performance might occur. Furthermore, if an amount of coupling between the transmitting antenna and the receiving antenna is large, undesired oscillation might occur and retransmission could not be performed at all. In order to reduce an amount of the coupling, a relay station has to be constructed as of separation type, in which a physical distance between the transmitting antenna and the receiving antenna is large or a shielding effect by landform has to be utilized. However, such solution results in an increase in cost.

In a pager system utilizing wireless call technique, a transmitting antenna and a receiving antenna are arranged close to each other and retransmission is performed on the same frequency. In this system, coupling loop interference is cancelled by an electric method. It should be noted that this pager system adopts a remodulation relay system, in which a received signal is once demodulated into data and then the thus demodulated data is modulated again. However, such remodulation relay system could not be applied to the SFN using the OFDM signal, which requires a sufficiently short delay time at a relay station such as a relay station in the digital terrestrial broadcasting. In the relay system of the digital terrestrial broadcasting, a bandwidth is very wide such as about 6 MHz (in Japan) as compared with the pager system having a narrow bandwidth of about several tens kHz, and characteristics in band due to coupling loop interference are very complicated. Therefore, a technique for canceling the coupling loop interference in the pager system could not be applied to the digital terrestrial broadcasting.

As explained above, upon introducing the digital terrestrial broadcasting, the SFN should be adopted due to a lack of vacant channels. In the OFDM signal, a symbol frequency may be decreased and a symbol period may be prolonged by increasing the number of carriers as compared with the single carrier modulation system. Therefore, a guard interval having a relatively long period may be added with a slight decrease in transmission efficiency, and a very large tolerance against multipath interference may be realized. In this manner, the SFN may be realized by utilizing the faculty of the strong tolerance against multipath interference.

When the broadcasting wave relay is performed in the SFN, it is important to take into account of a delay time caused by a broadcasting wave relay equipment mainly consisting of an amplifier performing a power amplification of a received signal and a bandwidth of the transmitted signal. As stated above, in the relay station having the coupling loop interference canceling faculty used in the communication field such as the pager system, the so-called remodulation relay system in which the received signal is once demodulated into the data and then the data is modulated again is adopted, and a bandwidth of a channel is very narrow such as about several tens kHz. Contrary to this, a bandwidth of a channel of the digital terrestrial broadcasting is very wide such as 6 MHz (in Japan). Now it is assumed that the remodulation relay system is adopted to the OFDM signal in the digital terrestrial broadcasting system. A time length of one symbol of the OFDM modulated signal is fairly longer than that of the pager system, and therefore a long delay time longer than the guard interval will be introduced by the data demodulating equipment provided in the broadcasting wave relay station. In this case, receivers provided in general customers will be affected by multipath interference caused by echo which has a longer duration than the guard interval, and an error rate will be increased largely.

Due to the above mentioned reasons, a delay time caused by the broadcasting wave relay equipment should be sufficiently shorter than the guard interval. In the known canceller for the interference wave used in the pager system, a complex signal derived from the retransmitted signal is multiplied by complex coefficients and the thus multiplied signal is fedback to the input side to cancel the interference wave. If the transmission bandwidth is sufficiently narrow, the characteristic in band may be considered to be flat as long as a disturbing wave due to interference having a very long delay time is not existent, and therefore the above mentioned interference wave canceller will be sufficient. In the broadcasting terrestrial system having a wide bandwidth such as about 6 MHz (in Japan), the frequency characteristic in band might be complicated by interference waves due to plural kinds of interference having different delay times. Therefore, the equalization could not be attained over the whole bandwidth by the simple feedback of multiplication results of the complex coefficients.

US patent 5,691,978 describes a method whereby both transceivers of a full-duplex RF communications system can use the same spectrum at the same time. Self-interference is cancelled using a combination of antenna placement to minimize transmission and inductive coupling between the transmit antenna and the receive antenna, an analog RF canceler to subtract some amount of the self transmitted signal from the receive antenna signal, and a digital adaptive canceler operating at the baseband frequency to cancel dynamic coupled transmissions caused by moving reflectors or by drifting performance of the transceiver components.

EP 0 801 474 A1 relates to a booster system for transmitting a received wave after amplifying it. The booster system comprises a receiving antenna section, a carrier combining section, a transmitting section, a transmitting antenna section and a parameter control section. The carrier combining section multiplies a canceling signal by a cancel parameter to obtain a replica signal, and then combines it with a received signal in at least one of a radio frequency band, an intermediate frequency band and a base band, and derives a combined base band signal from the combined signal. The transmitting section generates a send signal and a canceling signal by using a signal demodulated through the demodulation of the combined base band signal. Based on the combined base band signal and the canceling signal, the parameter control section determines a canceling parameter such that the power of the combined base band signal is reduced, wherein the parameter is provided to the carrier combining section.

US patent 5,444,864 relates to a method and apparatus for generating a cancellation signal that is a gain and phase matched estimate of a leak-through signal generated by an interfering transmitter. A leak-through signal canceller is coupled to the transmit line to sample the transmitted signal and obtain a reference signal for further processing. The leak-through signal canceller is also coupled to a receive line to receive the received/leak-through signal. The leak-through signal canceller generates a cancellation signal which is subtracted from the received/leak-through signal.

The present invention has for its object to provide an interference wave canceller, which can be adopted not for the remodulation relay system which has been utilized in the paper system, but for the direct relay system in which a received signal is simply amplified and the thus amplified signal is retransmitted, and thus a delay time is little increased theoretically by a broadcasting wave relay equipment even for a signal having a wide bandwidth such as the digital terrestrial broadcasting signal.

Disclosure of the Invention

The object of the present invention is solved by an interference wave canceller having the features of independent claim 1. Preferred embodiments are defined by dependent claims 2 to 12.

In an interference wave canceller according to the invention, a signal derived from an input side or an output side of a broadcasting wave relay equipment (an amplifier for performing a power amplification in a relay station) is subjected to the quadrature demodulation and is converted into an equivalent complex baseband signal, and then the thus converted equivalent baseband signal is supplied to a digital filter of a kind to be explained later to make a transfer characteristic of the digital filter equal to that of the transmission paths of an interference wave at the relay station.

That is to say, the signal derived from the input or output side of the broadcasting wave relay equipment is supplied to the digital filter having the transfer characteristic equal to that of the transmission paths of the interference wave to generate a replica signal corresponding to the interference components. This replica signal is then subtracted from an input signal which is received by the relevant relay station and includes the interference components to cancel out the interference induced by the coupling between a transmitting antenna and a receiving antenna of the relevant relay station. It should be noted that the subtraction may be replaced by an addition of a polarity reversed replica signal (positive or negative) to the received input signal including the interference component.

According to the invention, an interference wave canceller for canceling interference components induced by the coupling loop interference produced in a relay station of direct relay system including a receiving antenna, a broadcasting wave relay equipment for amplifying an input signal received by the receiving antenna, and a transmitting antenna for transmitting a signal amplified by said broadcasting wave relay equipment, comprises:

a digital signal processing unit having an input terminal for receiving a signal derived from an input signal or an output signal of said broadcasting wave relay equipment and an output terminal for deriving a replica signal corresponding to the interference components, and

a subtractor having a first input terminal for receiving said input signal received by said receiving antenna and containing the interference components, a second input terminal for receiving said replica signal generated from the output terminal of said digital signal processing unit, and an output terminal for generating a signal from which the interference components have been removed by subtracting said replica signal received at said second input terminal from the reception signal received at said first input terminal.

In an embodiment of the interference wave canceller according to the invention, said digital signal processing unit includes an adaptive complex digital filter, and a tap coefficient generating circuit for setting tap coefficients of said adaptive complex digital filter by processing the signals supplied to the digital signal processing unit. The tap coefficient generating circuit may include a quadrature demodulator generating an equivalent baseband signal by processing the signal derived from the input or output terminal of the broadcasting wave relay equipment, a FFT (Fast Fourier Transform) circuit generating an estimation signal estimating a characteristic of the interference components by processing said equivalent baseband signal, and a DSP (Digital Signal Processor) circuit generating a complex impulse response by processing the estimation signal for the coupling loop characteristic derived from said FFT circuit, wherein the tap coefficients of the adaptive complex digital filter are set in accordance with said complex impulse response. According to the invention, the impulse response generated by the DSP circuit has a finite bit length and a finite time length, and therefore they directly correspond to the tap coefficients.

In another embodiment of the interference wave canceller according to the invention, said digital signal processing unit includes a real number coefficient digital filter having a band pass property, and a circuit for setting tap coefficients of the real number coefficient digital filter, wherein said circuit for setting the tap coefficients of the real number coefficient digital filter includes a quadrature demodulator for generating an equivalent baseband signal by processing said signal derived from the input or output terminal of the broadcasting wave relay equipment, a FFT circuit for generating an estimation signal for estimating a characteristic of the interference waves by processing said equivalent baseband signal, and a DSP circuit for generating an impulse response by processing said estimation signal supplied from said FFT circuit and representing the characteristic of the interference waves, wherein tap coefficients of said real number coefficient digital filter are set in accordance with said impulse response.

It should be noted that the interference wave canceller according to the invention may be preferably applied to the digital broadcasting by using the BST-OFDM system and DVB-T system. In an embodiment of the former application, a transfer function of a transmission path of the interference waves may be estimated by utilizing the fact that amplitudes of carriers of CP signal contained in the BST-OFDM signal, and TMCC signal, AC signal and SP signal consisting of BPSK modulated carriers are constant.

In such an embodiment, an estimation accuracy of the transfer function of the transmission path of the disturbing waves may be improved by first performing a coarse estimation of the transfer function of the disturbing waves by utilizing the CP signal or TMCC signal contained in all symbols of the BST-OFDM signal, and then by carrying out a fine estimation of the transfer function of the transmission path of the interference wave by utilizing the SP signal which is transmitted at a given symbol interval, but is arranged at a much finer interval on the frequency axis than said CP signal or TMCC signal.

Brief Description of the Drawings

Fig. 1 is a block diagram showing an embodiment of the principal structure of the interference wave canceller according to the present invention, in which loop interference caused by the coupling between a transmitting antenna and a receiving antenna of a broadcasting wave relay station is cancelled out;

Fig. 2 is a block diagram illustrating another embodiment of the principal structure of the interference wave canceller according to the present invention, in which loop interference caused by the coupling between a transmitting antenna and a receiving antenna of a broadcasting wave relay station is cancelled out;

Fig. 3 is a block diagram of the circuit construction of Fig. 1, in which signals, their Fourier transforms, impulse responses and their Fourier transforms for showing how to cancel the loop interference in the circuit of Fig. 1;

Fig. 4 is a schematic view illustrating the structure of OFDM segment of the BST-OFDM signal;

Fig. 5 is a schematic view showing an example of OFDM segment of a coherent modulation portion;

Fig. 6 is a block diagram representing a first embodiment of the interference wave canceller according to the invention;

Fig. 7 is a block diagram showing a detailed structure of a digital signal processing unit generating a replica of a loop interference signal in Fig. 6;

Fig. 8 is a block diagram depicting a second embodiment of the interference wave canceller according to the invention;

Fig. 9 is a block diagram showing a detailed structure of a digital signal processing unit generating a replica of a coupling loop interference signal in Fig. 8;

Fig. 10 is a block diagram showing a detailed structure of the digital signal processing unit generating the replica of the loop interference signal, said portion being constructed by a real number coefficient digital filter having a band-pass property; and

Fig. 11 is a block diagram illustrating an embodiment of an adaptive digital filter.

Best Mode of the Invention

Now the present invention will be explained in greater detail with reference to the accompanying drawings.

In case of constructing the SFN by the broadcasting wave relay in the digital terrestrial broadcasting, a broadcasting signal transmitted from a master station is amplified by a broadcasting wave relay equipment and the amplified signal is transmitted again on the same frequency. A field strength of the transmitted signal is much stronger than that of the received signal from the master station. The receiving antenna has a directional beam to the master station and the transmitting antenna has a directivity corresponding to a configuration of a service area, and in general a broadcasting wave is transmitted over a wide angle. Therefore, coupling loop interference occurs in accordance with a directive gain of the transmitting antenna toward the receiving antenna and a directive gain of the transmitting antenna toward the receiving antenna. Furthermore, a part of the broadcasting wave transmitted from the transmitting antenna is received by the receiving antenna through reflection by buildings, trees, mountains and so on near the relay station, and coupling loop interference also occurs. Therefore, these coupling loop interference are summed up at the receiving antenna as a compound signal of signals having various delay times, strengths and phases.

Furthermore, when the signal from the master station is received by the relay station, there might be echo due to multipath. Also in this case, interference similar to that caused by the above mentioned interference due to the coupling loop occurs. Furthermore, a relay station might receive signals having the same content transmitted from plural stations different from the master station from which a signal is to be received by the relevant relay station. Also in such a case, interference similar to that caused by the coupling loop occurs. According to the invention, undesired signal component due to these interference can be removed or reduced. As stated above, in the present specification, these interference are called interference waves.

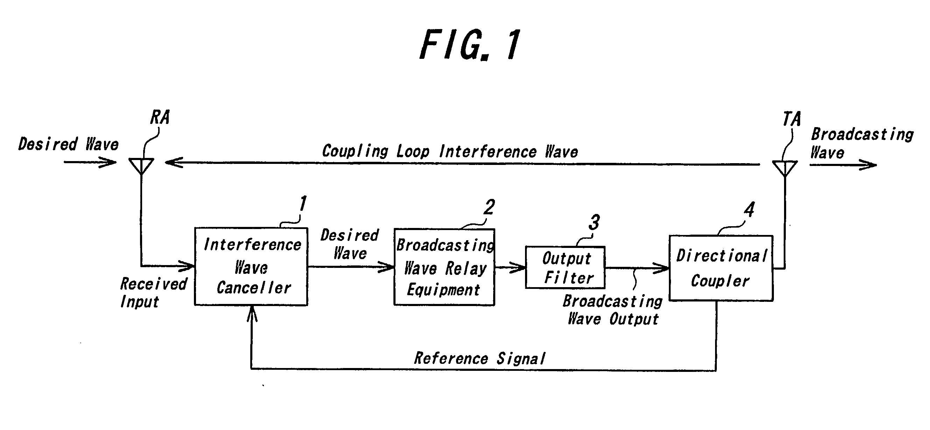

Fig. 1 is a block diagram showing an embodiment of the principal structure of a broadcasting wave relay station, in which coupling between transmitting and receiving antennas is cancelled by the interference wave canceller according to the invention.

In Fig. 1, a reference numeral 1 denotes a interference wave canceller according to the invention, 2 a broadcasting wave relay equipment mainly consisting of a power amplifier, 3 an output filter, and 4 represents a directional coupler.

In this structure, a desired wave (signal to be transmitted again) containing interference waves is received by a receiving antenna RA shown in the drawing, and then is supplied to an interference wave canceller 1 according to the present invention. In the interference wave canceller 1 according to the invention, a signal derived from an output broadcasting signal derived from the directional coupler 4 provided after the output filter 3 limiting a bandwidth of the broadcasting signal is used as a reference signal to estimate an overall system transfer function and to estimate a characteristic of the interference waves. At the same time, a transmission path whose transfer function is equal to a transfer function of a transmission path of the interference waves is realized by a complex digital filter. An output signal from this filter is subtracted from the received input signal to cancel out the interference waves. Therefore, the output signal from the interference wave canceller 1 does not include the interference waves any more.

In the manner just explained above, a desired wave having the interference waves removed therefrom is amplified by the broadcasting wave relay equipment 2, and the thus amplified desired wave is further supplied to a transmitting antenna TA by means of the output filter 3 and directional coupler 4 and is transmitted from the transmitting antenna. In this manner, general receivers can receive the broadcasting wave which does not contain the interference waves. It should be noted that the directional coupler 4 is required for deriving the reference signal from the output broadcasting wave, said reference signal serving to operate the interference wave canceller 1 according to the invention.

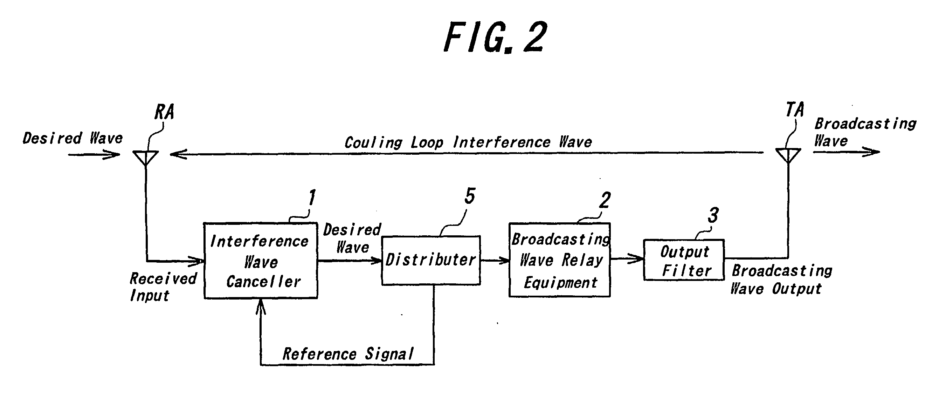

Fig. 2 is a block diagram illustrating another embodiment of the principal structure of the broadcasting wave relay station, in which interference caused by coupling between a transmitting antenna and a receiving antenna is cancelled out by means of the interference wave canceller according to the invention. In Fig. 2, blocks denoted by the same reference numerals used in Fig. 1 have similar circuit structures as Fig. 1.

The structure shown in Fig. 2 differs from Fig. 1 in that the reference signal which is derived from the output side of the broadcasting wave relay equipment 2 in Fig. 1, is derived from the input side of the broadcasting wave relay equipment 2. In this case, the reference signal is not affected by a characteristic of the broadcasting wave relay equipment 2 and output filter 3, and therefore suitable conversion should be carried out upon estimating the overall transfer function and producing the transfer function in the interference wave canceller 1.

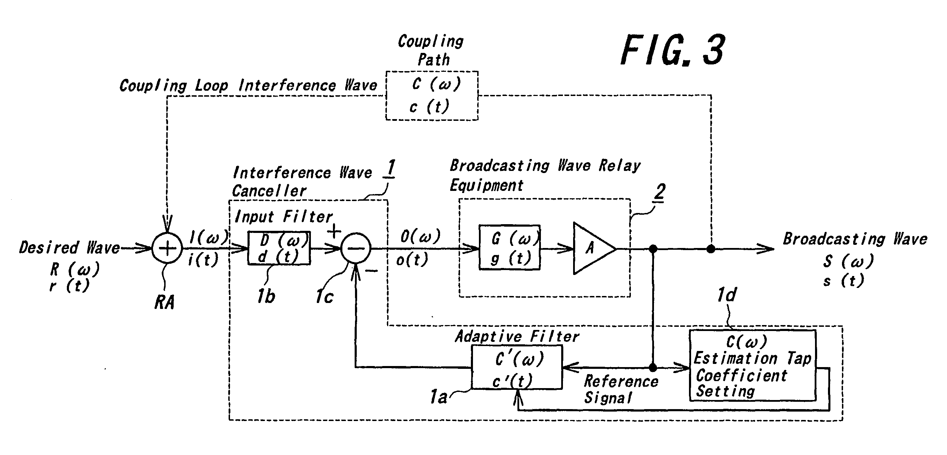

Now a manner of canceling the interference wave by the structure shown in Fig. 1 will be explained in accordance with the following equations with reference to Fig. 3. In the following explanation, a narrow meaning of the coupling loop interference is taken into mind.

In Fig. 3, among the circuit structure for canceling the interference wave due to the coupling loop, signals and their Fourier transforms, and impulse responses of various blocks and their Fourier transforms are defined in order to quantifying operations of the circuits in accordance with the following explanation.

In Fig. 3 as well as signals and impulse responses in the following explanation, capital letters denote complex numbers and small letters represent real numbers.

At first, it is assumed that t expresses time, $\omega$ an angular frequency, $r(t)$ a signal coming from a master station, $R(\omega)$ a Fourier transform of this signal, $s(t)$ a signal transmitted from a relevant relay station (broadcasting signal), and $S(\omega)$ denotes a Fourier transform of the broadcasting signal. Furthermore, it is assumed that an impulse response of a coupling path from a transmitting antenna to a receiving antenna of the relevant relay station is denoted by $c(t)$, its Fourier transform is expressed by $C(\omega)$, an impulse response of an adaptive filter (complex digital filter) 1a in the coupling loop interference wave canceller 1 is denoted by $c'(t)$, and its Fourier transform is represented by $C'(\omega)$. An impulse response of an input filter 1b in the interference wave canceller 1 is denoted by $d(t)$, its Fourier transform is expressed by $D(\omega)$, an impulse response of the broadcasting wave relay equipment 2 is denoted by $Axg(t)$, and its Fourier transform is represented by $A{\times}G(\omega)$, here A is an amplifier gain (constant) of the broadcasting wave relay equipment 2.

Moreover, an input signal to the interference canceller 1 is denoted by $i(t)$, its Fourier transform is expressed by $I(\omega)$, an output signal from the interference canceller 1 is represented by $o(t)$, and its Fourier transform is expressed by $O(\omega)$. The input signal to the interference canceller 1 is a sum of a desired wave and an interference wave, and therefore the following equation (1) is obtained, and an equation (2) is a Fourier transform of the equation (1)

$$i(t) = r(t) + c(t) *s\ (t) \qquad \cdots \cdots (1)$$

$$I(\omega)= \quad R(\omega) +C(\omega)\ S(\omega) \qquad \cdots \cdots (2)$$

Here * denotes a convolution operator. The input signal $i(t)$ supplied to the interference canceller 1 is passed through the input filter 1b in the canceller 1, and in a subtractor 1c, the output of the adaptive filter 1a is subtracted from the signal from the input filter. Then, the output signal $o(t)$ is derived from the interference canceller 1. Therefore, the following equation (3) is established, and its Fourier transform is expressed by an equation (4).

$$o(t) = i(t) *d(t) - c'(t) *s(t) \qquad \cdots \cdots (3)$$

$$O(\omega) = I(\omega)\ D(\omega) - C'(\omega)\ S(\omega) \quad \cdots \cdots (4)$$

The output signal $o(t)$ from the interference canceller 1 is amplified by the broadcasting wave relay equipment 2 to obtain the broadcasting signal $s(t)$, which is transmitted by the transmitting antenna. Therefore, the following equation (5) may be obtained, and its Fourier transform is denoted by an equation (6).

$$s(t) = A \cdot o(t) *g(t) \qquad \cdots \cdots (5)$$

$$S(\omega) = A \cdot O(\omega) \cdot G(\omega) \qquad \cdots \cdots (6)$$

When this equation (6) is replaced
by the above mentioned equation (4), the following equation (7) is obtained.

$$S(\omega) = A \cdot G(\omega)\,\{I(\omega)D(\omega) - C'(\omega)\,S(\omega)\} \qquad \cdots\cdots (7)$$

When this equation (7) is replaced by the above mentioned equation (2), the following equation (8) may be derived.

$$S(\omega) = A \cdot G(\omega)\,[\{R(\omega) + C(\omega)S(\omega)\}\,D(\omega) - C'(\omega)S(\omega)] \quad \cdots\cdots (8)$$

This equation (8) may be rewritten into the following equation (9).

$$S(\omega)[1 - A \cdot G(\omega)\{D(\omega)C(\omega) - C'(\omega)\}] = A \cdot G(\omega)R(\omega)D(\omega) \quad \cdots\cdots (9)$$

When this equation (9) is deformed, a transfer function of the overall system $F(\omega)$ may be expressed by the following equation (10).

$$F(\omega) = \frac{S(\omega)}{R(\omega)} = \frac{A \cdot G(\omega)D(\omega)}{1 - A \cdot G(\omega)\{C(\omega)D(\omega) - C'(\omega)\}} \qquad \cdots\cdots (10)$$

If the overall transfer function $F(\omega)$ can be expressed by the gain A of the broadcasting wave relay equipment 2, its frequency characteristic and the characteristic $D(\omega)$ of the input filter 1b in the interference wave canceller 1 in the following equation (11), influence of the coupling loop can be considered to be cancelled out.

$$F(\omega) = A \cdot G(\omega)D(\omega) \qquad \cdots\cdots (11)$$

A necessary condition for establishing this equation (11) is that a denominator in the equation (10) becomes 1, and this requires the establishment of the following equation (12).

$$D(\omega)C(\omega) = C'(\omega) \qquad \cdots\cdots (12)$$

This equation (12) means that the cancellation can be performed when the frequency characteristic (right term) of the adaptive filer 1a is equal to a total frequency characteristic (left term) of the coupling path and input filter 1b. Since $G(\omega)$ and $D(\omega)$ are known, the coupling loop interference can be cancelled out if the tap coefficient setting circuit 1d can estimate $C(\omega)$.

Next, a manner of estimating the transfer function of the transmission path of the interference waves will be explained.

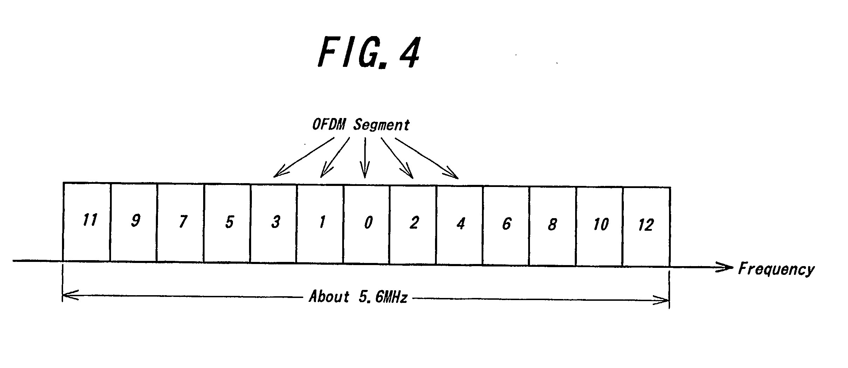

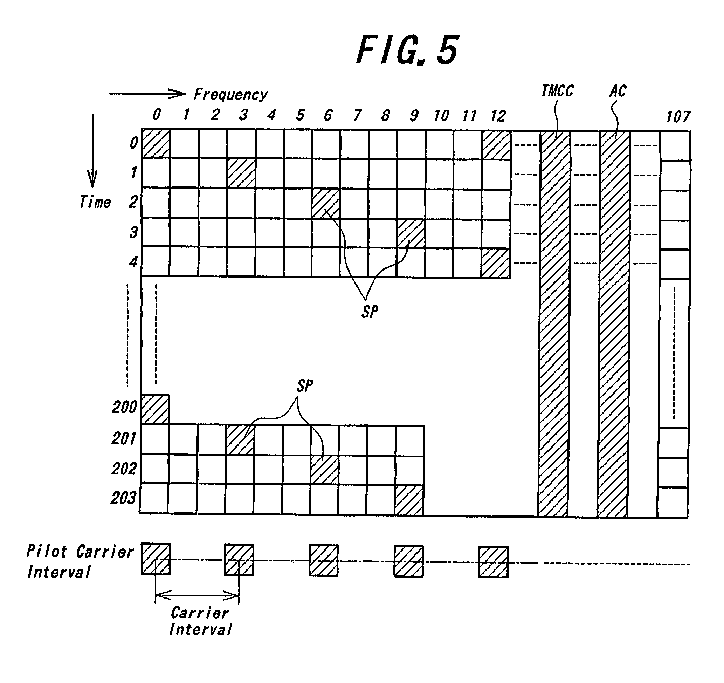

Figs. 4 and 5 show the structure of OFDM segment of the BST-OFDM signal and the structure of OFDM segment in the coherent modulation part, respectively.

In the BST-OFDM signal, in order to make the demodulation at the receiver easy, there are included reference signals such as CP (Continual Pilot), AC (Auxiliary Channel) and SP (Scattered Pilot). Furthermore, in every OFDM segments, there is contained TMCC (Transmission and Multiplexing Configuration Control) for denoting the modulation method of the OFDM segments.

These carrier signals have a constant amplitude, and the carriers except for CP are BPSK modulated. Therefore, the characteristic of the transmission path of the interference waves can be estimated by demodulating the BST-OFDM signal and deriving the amplitude values and phase values of the carriers of CP. AC, SP and TMCC. In this explanation, all the OFDM segments belong to the coherent modulation part and the characteristic of the coupling path is estimated by utilizing SP. As shown in Fig. 5, SP is inserted with 12 carrier intervals within a symbol, and the inserted position is shifted by every three carriers in the direction of symbols and is returned into the original position after four symbols. Furthermore, SP has a constant amplitude and its phase is modulated in accordance with a given rule. Therefore, if a fluctuation of the transmission path of the interference waves is sufficiently slower than a symbol rate, the frequency-amplitude and frequency-phase characteristics can be obtained with an interval of a three carrier period in the direction of frequency by performing the inspection for a four symbol period.

A reference carrier and a reference symbol timing are derived by regenerating the carrier and symbol timing from the received BST-OFDM signal, and then the received BST-OFDM signal is quadrature demodulated by utilizing the reference carrier and reference symbol timing. The demodulated signal is further processed by the complex FFT, and real number data $X_k$ and an imaginary number data $Y_k$ (k=1~N: carrier number and N is a total number of carriers) are observed for a four symbol period to derive $SX_L$ and $SY_L$ corresponding to SP (here L=1~$N_S$: L is number of discrete frequency, $N_S$ is four times of a total number of SP within a symbol). Number L of the discrete frequency is identical with the SP carrier frequency, and when L is increased or decreased by one, the corresponding frequency is increased or decreased by a three times of the carrier interval of the OFDM signal.

In addition to the above mentioned $SX_L$ and $SY_L$, OFDM frame timing is regenerated, and a real part value $rX_L$ and an imaginary part value $rY_L$ are derived from the predetermined amplitude A and phase $\Phi$ of SP. Then, differences $eX_L$ and $eY_L$ denoted by the following equations (13) and (14) are derived.

$$eX_L \ = \ SX_L \ - \ rX_L \qquad\qquad \ldots\ldots (13)$$

$$eY_L \ = \ SY_L \ - \ rY_L \qquad\qquad \ldots\ldots (14)$$

The differences $eX_L$ and $eY_L$ thus derived may be considered as samples obtained by sampling the total transfer function $F(\omega)$ including the transmission path of interference waves within the frequency domain if a distortion of the broadcasting wave coming from the master station is sufficiently small. The above mentioned equation (10) may be rewritten into the following equation (15).

$$C(\omega)D(\omega) - C'(\omega) = \frac{F(\omega) - A \cdot G(\omega)D(\omega)}{A \cdot G(\omega)F(\omega)} \qquad \ldots\ldots (15)$$

A left term of this equation (15) represents a difference between a transfer function of the feedback loop for canceling the interference wave and the actual interference wave system taking into account of the influence of a delay induced by the input filter, and this difference $E(\omega)$ may be expressed by the following equation (16).

$$E(\omega) = \frac{F(\omega) - A \cdot G(\omega)D(\omega)}{A \cdot G(\omega)F(\omega)} \qquad \ldots\ldots (16)$$

In this equation (16), if $E(\omega)$ is zero, the interference wave could be completely cancelled out. A, $G(\omega)$ and $D(\omega)$ are known and do not change, and thus it is possible to obtain sampling values at the frequency corresponding to SP. Now it is assumed that these sampling values are denoted by $G_L$ and $D_L$, the sampling value $E_L$ of $E(\omega)$ may be expressed by the following equation (17).

$$E_L = \frac{F_L - A \cdot G_L D_L}{A \cdot G_L F_L} \qquad \ldots\ldots (17)$$

Here, $F_L$ is represented by the following equation (18) and i is an imaginary number

$$F_L = eX_L + i \cdot eY_L \qquad \dots \dots \ (18)$$

A tap coefficient correcting amount $H_{m,n-1}$ is derived from a complex impulse response which is obtained by subjecting $E(\omega)$ derived from $E_L$ in the equation (17) to the complex inverse FFT process, and the tap coefficients of the adaptive complex digital filter are corrected repeatedly in accordance with the following equation (19). Then, the interference wave can be completely cancelled out. Even if the characteristic of the interference wave varies, the correction can follow this change and the cancellation can be performed. Here, m is the number of coefficients, and n is an integer number representing the number of the tap coefficient refresh or update operations. In the equation (19), $\mu$ is a suitable value within a range of 0-1, $H_{m,n-1}$ is the above mentioned complex impulse response, a first parameter $P_{m,n-1}$ in a left term is a tap coefficient before update, and $P_{m,n}$ (left term) is a tap coefficient after update.

$$P_{m,n} = P_{m,n-1} + \mu \cdot H_{m,n-1} \qquad \dots \dots \ (19)$$

Now embodiments of the interference wave canceller according to the present invention constructed in accordance with the above principle will be explained.

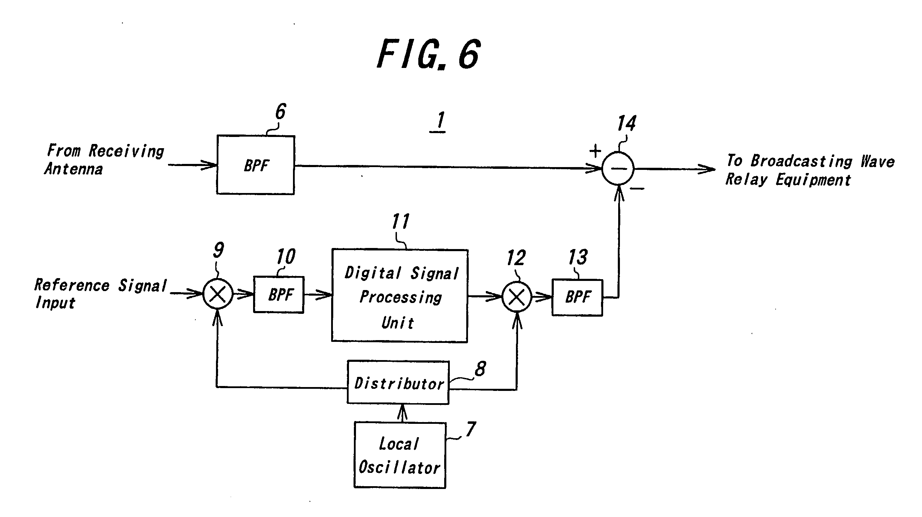

Fig. 6 is a block diagram showing a first embodiment of the interference wave canceller according to the invention. In Fig. 6, reference numerals 6, 10 and 13 denote band pass filter (hereinafter referred to BPF), 7 local oscillator, 8 distributor, 9 and 12 multiplier serving as mixing circuit, 11 digital signal processing unit generating a replica signal of interference signal converted into IF band, and a reference numeral 14 represents subtractor.

Now the operation of the embodiment shown in Fig. 6 will be explained.

A signal received by a receiving antenna is supplied to the BPF 6 and its bandwidth is limited thereby, and at the same time a delay for correcting the delay introduced by the digital signal processing unit 11 is given. Next, a reference signal is derived at the input side of an amplifier in a relay station, and is multiplied in the mixer circuit 9 with a local oscillation signal which is generated by the local oscillator 7 and is divided by the distributor 8 to be converted into an IF signal. In the BPF 10, an image component is removed from the IF signal, and the IF signal having the image component removed therefrom is supplied to the digital signal processing unit 11, which generates a replica signal of an interference signal having the same frequency-amplitude and frequency-phase characteristics as the signal which has been supplied from the coupling path and is received by the receiving antenna.

The replica signal (IF signal) of the interference wave generated by the digital signal processing unit 11 is multiplied, in the mixer circuit 12, with the local oscillation signal provided from the distributor 8 and is frequency-converted into a RF signal. Furthermore, after removing the image component by the BPF 13, the RF signal is supplied to the subtractor 14. In the subtractor 14, the replica signal of the coupling loop interference signal is subtracted from the signal received by the antenna and supplied from the BPF 6 to the subtractor 14. In this manner, the signal having the interference wave component removed therefrom is supplied to the broadcasting wave relay equipment.

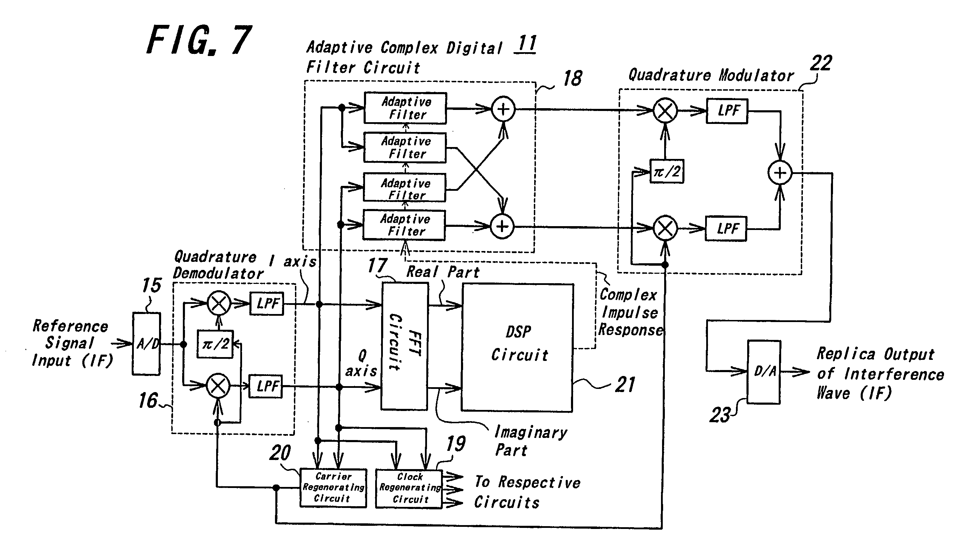

Fig. 7 is a block diagram illustrating a detailed structure of an embodiment of the digital signal processing unit 11 generating the replica signal of the interference signal in Fig. 6. In Fig. 7, a reference numeral 15 denotes AD converter, 16 quadrature demodulator, 17 FFT (Fast Fourier Transform) circuit, 18 adaptive complex digital filter, 19 clock regenerating circuit, 20 carrier regenerating circuit, 21 DSP (Digital Signal Processor) circuit, 22 quadrature modulator, and a reference numeral 23 represents DA converter.

Next, the operation of this digital signal processing unit 11 will be explained.

The reference signal (IF signal) supplied from the BPF 10 shown in Fig. 6 to the digital signal processing unit 11 is first converted by the AD converter 15 into a digital IF signal, and then the digital IF signal is further converted by the quadrature demodulator 16 into I axis signal and Q axis signal of an equivalent baseband signal, said signals being supplied to the FFT circuit 17, adaptive complex digital filter 18, clock regenerating circuit 19 and carrier regenerating circuit 20. The clock regenerating circuit 19 regenerates a symbol timing from the BST-OFDM signal as well as various kinds of timing signals and clock signal required by the digital signal processing unit 11, and supplied the clock signal to various circuits which require the clock signal.

The carrier regenerating circuit 20 regenerates the reference carrier signal from the BST-OFDM signal which is supplied to the quadrature demodulator 16 and quadrature modulator 22. In the FFT circuit 17, extraction of the BST-OFDM signal within a useful symbol period as well as the FFT process are performed. A result of this FFT process is supplied to the succeeding DSP circuit 21. In the DSP circuit 21, a transfer function of the coupling path is derived by extracting carrier components of SP, CP and TMCC from the real and imaginary signals of the result of the FFT process supplied from the FFT circuit 17, and then is converted into the complex impulse response by the inverse FFT process. Tap coefficients are derived and are supplied to the adaptive complex digital filter 18. In the adaptive complex digital filter 18, the same frequency-amplitude and frequency-phase characteristics as those of the signal which is received by the receiving antenna from the coupling path and is passed through the input filter are given to the equivalent baseband signal supplied from the quadrature demodulator 16, and the thus obtained signal is supplied to the quadrature modulator 22.

In the quadrature modulator 22, the equivalent baseband signal is converted into the digital IF signal by utilizing the same reference carrier signal which is generated by the carrier regenerating circuit 20 and is used in the quadrature demodulator 16, the digital IF signal is converted into an analog signal by the DA converter 23, said analog signal being an output of the relevant digital signal processing unit. In the above explanation, the adaptive complex digital filter 18 may be constructed by four adaptive digital filters and two adders as shown in the drawing. The adaptive complex digital filter 18 as well as the quadrature demodulator 16 and quadrature modulator 22 surrounded by broken lines have known structure, and an explanation of their detailed construction may be dispensed with.

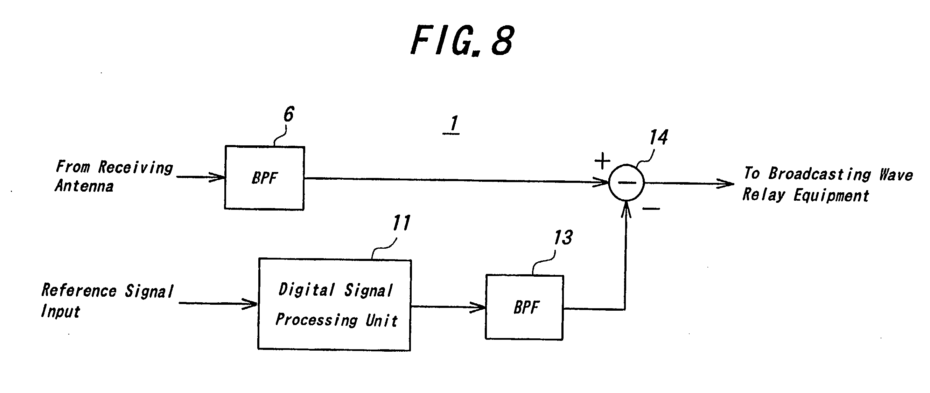

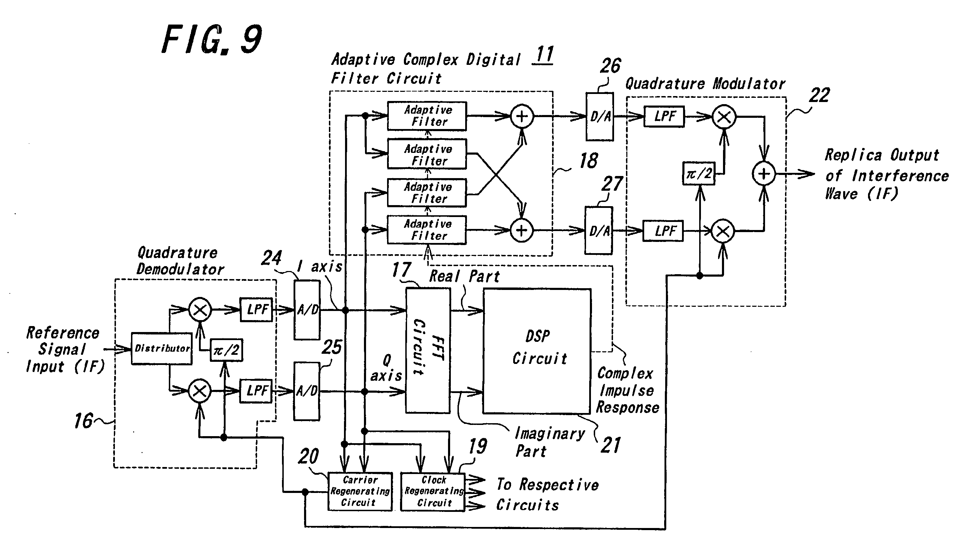

Figs. 8 and 9 are block diagram showing a second embodiment of the interference wave canceller using quadrature demodulator and quadrature modulator both treating analog signals. In this embodiment, it is no more necessary to convert the input signal to the interference wave canceller 1 (refer to Figs. 1 and 2) into the IF signal. However, two AD converters and two DA converters are required as shown in Fig. 9. Moreover, in order to obtain a sufficient canceling effect, very high quadrature imbalance is required for these quadrature demodulator and quadrature modulator. Furthermore, in the second embodiment, the regenerated carrier signal supplied from the carrier regenerating circuit 20 is of an analog signal. It should be noted that the operation of the circuit shown in Figs. 8 and 9 could be easily presumed by a person skilled in the art from Figs. 6 and 7, and a detailed explanation may be dispensed with.

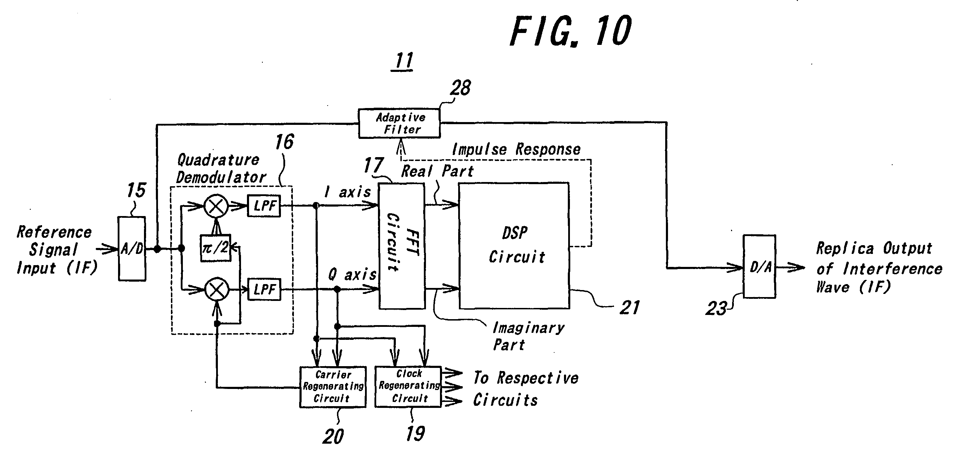

In the first and second embodiments of the interference wave canceller according to the present invention, the adaptive complex digital filter 18 is provided in the digital signal processing unit 11 to generate the replica signal for canceling the interference component as shown in Figs. 6-9, but according to the invention, the digital signal processing unit 11 may be constructed by the real number coefficient digital filter 28 having a given band pass characteristic as illustrated in Fig. 10.

In this case, the equivalent baseband signal obtained by the quadrature demodulation by the quadrature demodulator 16 is supplied to the FFT circuit 17 for estimating the characteristic of the transmission path of interference wave, the reference signal (IF signal) prior to the quadrature demodulation is supplied to the real number coefficient digital filter 28 having the band pass characteristic which generates the replica signal of the interference wave having the same frequency-amplitude and frequency-phase characteristics as the those introduced by the coupling path. In this manner, a give band pass characteristic is given. In this structure, it is sufficient to provide only one block of the adaptive digital filter, but a higher speed operation is required.

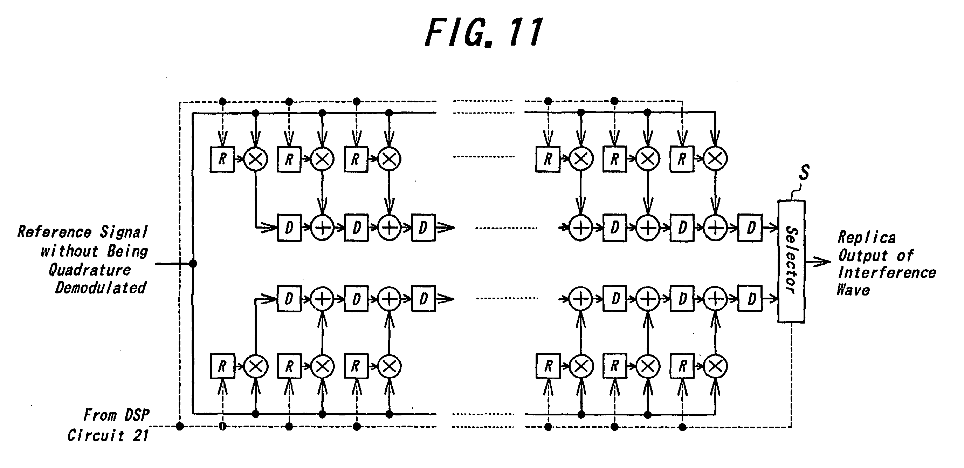

In both embodiments (including the case of Figs. 7 and 9), the digital filter generating the replica signal of the interference signal may be constructed in the form of a weighted summation circuit which includes, for instance, a plurality of coefficient registers R, an adder ⊕, multiplier ⊗, and D latch D as shown in Fig. 11. One adaptive digital filter includes two independent digital filters, which are alternately selected by a selector S, and update coefficients supplied from the DSP circuit 21 (refer to Fig. 10) are loaded into non-selected digital filter. After an incorrect signal caused by the update of coefficients has been disappeared, the digital filter is changed. By coinciding this changing timing with the guard interval of the OFDM signal, it is possible to reduce an influence of the coefficient update. When the adaptive complex digital filter 18 explained with reference to Figs. 6-9 is used, four adaptive digital filters are required, but the adaptive digital filter 28 shown in Fig. 10 needs only one. It should be noted that the present invention may be equally applied to the DVB-T system in a similar manner to the BST-OFDM system. Industrial Applicability

According to the present invention, it is possible to cancel interference component due to coupling between a transmitting antenna and a receiving antenna of a broadcasting wave relay station in SFN, interference component due to multipath, and interference component due to signals sent from transmitting stations other than a desired master station. Therefore, a necessary cost for realizing SFN in the digital terrestrial broadcasting can be largely reduced.

## Claims

1. An interference wave canceller (1) for canceling interference component induced by interference produced by coupling between a transmitting antenna and a receiving antenna in a relay station of direct relay type including a receiving antenna (RA), a broadcasting wave relay equipment (2) for amplifying an input signal received by the receiving antenna (RA), and a transmitting antenna (TA) for transmitting a signal amplified by said broadcasting wave relay equipment (2), said canceller (1) comprising:

    a digital signal processing unit (11) having

- an input terminal for receiving a signal derived from an input signal or an output signal of said broadcasting wave relay equipment (2) and
- an output terminal for deriving a replica signal corresponding to the interference component; and
- a subtractor having a first input terminal for receiving said input signal received by said receiving antenna (RA) and containing the interference component, a second input terminal for receiving said replica signal generated from the output terminal of said digital signal processing unit (11), and an output terminal for generating a signal from which the interference component has been removed by subtracting said replica signal received at said second input terminal from the receiving signal received at said first input terminal;

**characterized in that** said digital signal processing unit (11) includes

an adaptive filter (28), having the transfer characteristic equal to that of the transmission path of the interference wave, for receiving said signal derived from the input signal or the output signal of said broadcasting wave relay equipment (2) to generate said replica signal corresponding to the interference component; and

a tap coefficient setting circuit (17, 21) for setting tap coefficients of said adaptive filter (28) by processing the signals supplied to the digital signal processing unit (11);

wherein the interference wave canceller (1) is adapted to estimate an overall transfer function of the system and to estimate a characteristic of the interference waves.

2.  An interference wave canceller (1) according to claim 1,

wherein said adaptive filter includes

a quadrature demodulator (16) for generating an equivalent baseband signal by processing the signal derived from the input or output terminal of the broadcasting wave relay equipment (2);

an adaptive complex digital filter (18) for receiving the baseband signal derived from a quadrature demodulator (16) and generating an equivalent baseband signal by filtering process ; and

a quadrature modulator (22) for receiving said equivalent baseband signal derived from said adaptive complex digital filter (18) and generating a modulated signal;

wherein said tap coefficient setting circuit (17, 21) for setting tap coefficients of said adaptive complex digital filter (18) comprises

an FFT circuit (17) for generating an estimation signal estimating a characteristic of the interference component by processing said equivalent baseband signal from said quadrature demodulator (16); and

a DSP circuit (21) for generating a complex impulse response by processing the estimation signal for coupling characteristic derived from said FFT circuit (17),

wherein said tap coefficient setting circuit (17, 21) is adapted to set the tap coefficients of the adaptive complex digital filter (18) in accordance with said complex impulse response.

3.  An interference wave canceller (1) according to claim 2, wherein said DSP circuit (21) is adapted to derive a difference between a transfer function of a feedback loop for canceling the interference wave and a transfer function of an actual interference transmission path.

4.  An interference wave canceller according to claim 2 or 3, wherein said signal received by the relay station is a digital broadcasting signal of BST-OFDM system, and said tap coefficient setting circuit (17, 21) is constructed such that the tap coefficients of the adaptive complex digital filter (18) are set by estimating a transfer function of the transmission system of the interference waves by utilizing the fact that amplitudes of carriers of TMCC signal, AC signal and SP signal consisting of BPSK modulated wave, and CP signal contained in BST-OFDM signal are constant.

5.  An interference wave canceller according to claim 4, wherein said tap coefficient setting circuit (17, 21) is constructed such that a coarse estimation of the transfer function of interference waves is first performed by utilizing the CP signal, AC signal or TMCC signal contained in all symbols of the BST-OFDM signal, and then a fine estimation of the transfer function of the interference waves is performed by utilizing the SP signal which is transmitted at a given symbol interval, but is arranged at a much finer interval on the frequency axis than said CP signal, AC signal or TMCC signal.

6.  An interference wave canceller according to claim 1, wherein said digital signal processing unit (11) includes a real number coefficient digital filter (28) having a band pass property, and a circuit for setting tap coefficients (17, 21) of the real number coefficient digital filter (28).

7.  An interference wave canceller according to claim 6, wherein said circuit for setting the tap coefficients (17, 21) of the real number coefficient digital filter (28) includes

a quadrature demodulator (16) for generating an equivalent baseband signal by processing said signal derived from the input or output terminal of the broadcasting wave relay equipment (2),

a FFT circuit (17) for generating an estimation signal for estimating a characteristic of interference waves by processing said equivalent baseband signal, and

a DSP circuit (21) for generating an impulse response by processing said estimation signal supplied from said FFT circuit (17) and representing the characteristic of the interference waves,

wherein tap coefficients of said real number coefficient digital filter (28) are set in accordance with said impulse response.

8. An interference wave canceller (1) according to claim 7, wherein said DSP circuit (21) is adapted to derive a difference between a transfer function of a feedback loop for canceling the interference wave and a transfer function of an actual interference transmission path.

9. An interference wave canceller according to claim 6 or 7 or 8, wherein said signal received by the relay station is a digital broadcasting signal of BST-OFDM system, and said tap coefficient setting circuit (17, 21) is constructed such that the tap coefficients of the real number coefficient digital filter (28) are set by estimating a transfer function of the transmission system of the interference waves by utilizing the fact that amplitudes of carriers of TMCC signal, AC signal and SP signal consisting of BPSK modulated wave, and CP signal contained in BST-OFDM signal are constant.

10. An interference wave canceller according to claim 9, wherein said tap coefficient setting circuit is constructed such that a coarse estimation of the transfer function of the interference waves is first performed by utilizing the CP signal, AC signal or TMCC signal contained in all symbols of the BST-OFDM signal, and then a fine estimation of the transfer function of the interference waves is performed by utilizing the SP signal which is transmitted at a given symbol interval, but is arranged at a much finer interval on the frequency axis than said CP signal, AC signal or TMCC signal.

11. An interference wave canceller according to any one of claims 1 to 10, wherein each of said adaptive digital filters comprises two independent digital filter systems, these two adaptive digital filter systems are selected alternately, updated coefficients are loaded into a non-selected adaptive digital filter system, and the adaptive digital filter systems are changed after an incorrect signal caused by the update of coefficients is disappeared.

12. An interference wave canceller according to claim 11, wherein changing timing of said two adaptive digital filter systems is coincided with a guard interval of said BST-OFDM signal.

## Patentansprüche

1. Ein Interferenzwellenauslöscher (1) zum Auslöschen einer Interferenzkomponente, die durch Interferenz induziert wird, die erzeugt wird durch Kopplung zwischen einer Übertragungsantenne und einer Empfangsantenne in einer Relaisstation vom Direktrelaistyp, umfassend eine Empfangsantenne (RA), eine Sendewellenrelaisvorrichtung (2) zum Verstärken einem Eingangssignals, das durch die Empfangsantenne (RA) empfangen wird, und eine Übertragungsantenne (TA) zum Übertragen eines Signals, das durch die Sendewellenrelaisvorrichtung (2) verstärkt wird, wobei der Auslöscher (1) folgendes umfasst:

eine digitale Signalverarbeitungseinheit (11), die folgendes aufweist:

- einen Eingangsanschluss zum Empfangen eines Signals, das von einem Eingangssignal oder einem Ausgangssignal von der Sendewellenrelaisvorrichtung (2) abgeleitet ist, und
- einen Ausgangsanschluss zum Ableiten eines Repliksignals, das der Interferenzkomponente entspricht; und
- einen Subtrahierer, der einen ersten Eingangsanschluss zum Empfangen des Eingangssignals, das durch die Empfangsantenne (RA) empfangen wird, und die Interferenzkomponente umfasst, und einen zweiten Eingangsanschluss zum Empfangen des Repliksignals, das von dem Ausgangsanschluss der digitalen Verarbeitungseinheit (11) erzeugt wird, und ein Ausgangsanschluss aufweist zum Erzeugen eines Signals, von dem die Interferenzkomponente entfernt wurde durch Subtrahieren des Repliksignals, das bei dem zweiten Eingangsanschluss empfangen wird, von dem Empfangssignal, das bei dem ersten Eingangsanschluss empfangen wird;

**dadurch gekennzeichnet, dass** die digitale Signalverarbeitungseinheit (11) folgendes aufweist:
ein adaptives Filter (28), dessen Transfercharakteristik gleich der des Übertragungspfades der Interferenzwelle ist, zum Empfangen des Signals, das von dem Eingangssignal oder dem Ausgangssignal der Sendewellenrelaisvorrichtung (2) abgeleitet wird, um das Repliksignal zu erzeugen, das der Interferenzkomponente entspricht; und
einen Abzweigkoeffizienteneinstellungsschaltkreis (17, 21) zum Einstellen von Abzweigkoeffizienten des adaptiven Filters (28) durch Verarbeiten der Signale, die der digitalen Signalverarbeitungseinheit (11) zugeführt werden;

wobei der Interferenzwellenauslöscher (1) angepasst ist zum Abschätzen einer Gesamtübertragungsfunktion des Systems und zum Abschätzen einer Charakteristik der Interferenzwellen.

2. Ein Interferenzwellenauslöscher (1) nach Anspruch 1,
wobei das adaptive Filter folgendes umfasst:

einen Quadratur-Demodulator (16) zum Erzeugen eines äquivalenten Basisbandsignals durch Verarbeiten des Signals, das von dem Eingangs- oder Ausgangsanschluss der Sendewellenrelaisvorrichtung (2) abgeleitet wird;
ein adaptives komplexes Digitalfilter (18) zum Empfangen des Basisbandsignals, das von einem Quadratur-Demodulator (16) abgeleitet wird, und Erzeugen eines äquivalenten Basisbandsignals durch einen Filterprozess; und
einen Quadratur-Modulator (22) zum Empfangen des äquivalenten Basisbandsignals, das von dem adaptiven komplexen Digitalfilter (18) abgeleitet wird, und Erzeugen eines modulierten Signals;

wobei der Abzweigkoeffizienteneinstellungsschaltkreis (17, 21) zum Einstellen von Abzweigkoeffizienten des adaptiven komplexen Digitalfilter (18) folgendes umfasst:

einen FFT-Schaltkreis (17) zum Erzeugen eines Schätzsignals, das eine Charakteristik der Interferenzkomponente abschätzt, durch Verarbeiten des äquivalenten Basisbandsignals von dem Quadratur-Demodulator (16); und
einen DSP-Schaltkreis (21) zum Erzeugen einer komplexen Impulsantwort durch Verarbeiten des Schätzsignals zum Koppeln von Charakteristik, die von dem FFT-Schaltkreis (17) abgeleitet wird,

wobei der Abzweigkoeffizienteneinstellungsschaltkreis (17, 21) angepasst ist zum Einstellen der Abzweigkoeffizienten des adaptiven komplexen Digitalfilters (18) in Übereinstimmung mit der komplexen Impulsantwort.

3. Ein Interferenzwellenauslöscher (1) nach Anspruch 2, wobei der DSP-Schaltkreis (21) angepasst ist zum Ableiten einer Differenz zwischen einer Übertragungsfunktion einer Rückkoppelschleife zum Auslöschen der Interferenzwelle und einer Übertragungsfunktion eines tatsächlichen Interferenzübertragungspfads.

4. Ein Interferenzwellenauslöscher (1) nach Anspruch 2 oder 3, wobei das durch die Relaisstation empfangene Signal ein digitales Sendesignal vom BST-OFDM-System ist, und wobei der Abzweigkoeffizienteneinstellungsschaltkreis (17, 21) so konstruiert ist, dass die Abzweigkoeffizienten des adaptiven komplexen Filters (18) eingestellt werden durch Schätzen einer Übertragungsfunktion des Übertragungssystems der Interferenzwellen durch Verwenden der Tatsache, dass Amplituden der Träger eines TMCC-Signals, eines AC-Signals und eines SP-Signals, die aus einer BPSK modulierten Wellen bestehen, und eines CP-Signals, das in dem BST-OFDM-Signal enthalten ist, konstant sind.

5. Ein Interferenzwellenauslöscher (1) nach Anspruch 4, wobei der Abzweigkoeffizienteneinstellungsschaltkreis (17, 21) so konstruiert ist, dass eine grobe Schätzung der Übertragungsfunktion von Interferenzwellen zuerst Durchgeführt wird durch Verwenden des CP-Signals, AC-Signals oder TMCC-Signals, enthalten in allen Symbolen des BST-OFDM-Signals, und dann eine genaue Schätzung der Übertragungsfunktion der Interferenzwellen durchgeführt wird durch Verwenden des SP-Signals, das bei einem gegebenen Symbolintervall übertragen wird, jedoch angeordnet ist bei einem viel feineren Intervall auf der Frequenzachse als das CP-Signal, AC-Signal oder TMCC-Signal.

6. Ein Interferenzwellenauslöscher (1) nach Anspruch 1, wobei die digitale Signalverarbeitungseinheit (11) ein Realzahlenkoeffizienten-Digitalfilter (28), das eine Banddurchlasseigenschaft aufweist, und einen Schaltkreis umfasst zum Einstellen von Abzweigkoeffizienten (17, 21) des Realzahlenkoeffizienten-Digitalfilters (28).

7.  Ein Interferenzwellenauslöscher (1) nach Anspruch 6, wobei der Schaltkreis zum Einstellen der Abzweigkoeffizienten (17, 21) des Realzahlenkoeffizienten-Digitalfilters (28) folgendes umfasst:

    einen Quadratur-Demodulator (16) zum Erzeugen eines äquivalenten Basisbandsignals durch Verarbeiten des Signals, das von dem Eingangs- oder Ausgangsanschluss der Sendewellenrelaisvorrichtung (2) abgeleitet wird, einen FFT-Schaltkreis (17) zum Erzeugen eines Schätzsignals zum Schätzen einer Charakteristik der Interferenzwellen durch Verarbeiten des äquivalenten Basisbandsignals, und
    einen DSP-Schaltkreis (21) zum Erzeugen einer Impulsantwort durch Verarbeiten des Schätzsignals, das von dem FFT-Schaltkreis (17) zugeführt wird und die Charakteristik der Interferenzwellen repräsentiert,

    wobei die Abzweigkoeffizienten des Realzahlenkoeffizienten-Digitalfilters (28) eingestellt werden in Übereinstimmung mit der Impulsantwort.

8.  Ein Interferenzwellenauslöscher (1) nach Anspruch 7, wobei der DSP-Schaltkreis (21) angepasst ist zum Ableiten einer Differenz zwischen einer Übertragungsfunktion einer Rückkoppelschleife zum Auslöschen der Interferenzwelle und einer Übertragungsfunktion eines tatsächlichen Interferenzübertragungspfads.

9.  Ein Interferenzwellenauslöscher (1) nach Anspruch 6 oder 7 oder 8, wobei das durch die Relaisstation empfangene Signal ein digitales Sendesignal vom BST-OFDM-System ist, und wobei der Abzweigkoeffizienteneinstellungsschaltkreis (17, 21) so konstruiert ist, dass die Abzweigkoeffizienten des Realzahlenkoeffizienten-Digitalfilters (28) eingestellt werden durch Schätzen einer Übertragungsfunktion des Übertragungssystems der Interferenzwellen durch Verwenden der Tatsache, dass Amplituden der Träger eines TMCC-Signals, eines AC-Signals und eines SP-Signals, die aus einer BPSK modulierten Wellen bestehen, und eines CP-Signals, das in dem BST-OFDM-Signal enthalten ist, konstant sind.

10. Ein Interferenzwellenauslöscher (1) nach Anspruch 9, wobei der Abzweigkoeffizienteneinstellungsschaltkreis so konstruiert ist, dass eine grobe Schätzung der Übertragungsfunktion von Interferenzwellen zuerst Durchgeführt wird durch Verwenden des CP-Signals, AC-Signals oder TMCC-Signals, enthalten in allen Symbolen des BST-OFDM-Signals, und dann eine genaue Schätzung der Übertragungsfunktion der Interferenzwellen durchgeführt wird durch Verwenden des SP-Signals, das bei einem gegebenen Symbolintervall übertragen wird, jedoch angeordnet ist bei einem viel feineren Intervall auf der Frequenzachse als das CP-Signal, AC-Signal oder TMCC-Signal.

11. Ein Interferenzwellenauslöscher (1) nach einem der Ansprüche 1 bis 10, wobei jedes der adaptiven Digitalfilter zwei unabhängige Digitalfiltersysteme umfasst, wobei diese zwei adaptiven Digitalfiltersysteme alternierend ausgewählt werden, aktualisierte Koeffizienten werden in ein nicht ausgewähltes adaptives Digitalfiltersystem geladen, und die adaptiven Digitalfiltersysteme werden geändert, nachdem ein inkorrektes Signal, das durch die Aktualisierung von Koeffizienten verursacht wird, verschwunden ist.

12. Ein Interferenzwellenauslöscher (1) nach Anspruch 11, wobei eine Änderungszeitsteuerung der zwei adaptiven Digitalfiltersysteme koinzident mit einem Schutzintervall des BST-OFDM-Signals ist.

**Revendications**

1.  Dispositif d'annulation (1) d'ondes d'interférence pour annuler une composante d'interférence induite par une interférence produite par un raccordement entre une antenne de transmission et une antenne de réception dans une station relais du type à relais direct comportant une antenne de réception (RA), un équipement de relais (2) d'onde de diffusion pour amplifier un signal d'entrée reçu par l'antenne de réception (RA), et une antenne de transmission (TA) pour transmettre un signal amplifié par ledit équipement de relais (2) d'onde de diffusion, ledit dispositif d'annulation (1) comprenant:

    une unité (11) de traitement de signaux numériques ayant:

    - une borne d'entrée pour recevoir un signal dérivé d'un signal d'entrée ou d'un signal de sortie dudit équipement de relais (2) d'onde de diffusion, et
    - une borne de sortie pour dériver un signal de réplique correspondant à la composante d'interférence; et
    - un soustracteur ayant une première borne d'entrée pour recevoir ledit signal d'entrée reçu par ladite antenne de réception (RA) et contenant la composante d'interférence, une deuxième borne d'entrée pour recevoir ledit signal de réplique généré depuis la borne de sortie de ladite unité (11) de traitement de signaux numériques, et une borne de sortie pour générer un signal duquel la composante d'interférence a été retirée en soustrayant ledit signal de réplique reçu au niveau de ladite deuxième borne d'entrée du signal de réception reçu au niveau de ladite première borne d'entrée;

**caractérisé en ce que** ladite unité (11) de traitement de signaux numériques comporte:

un filtre adaptatif (28), dont la caractéristique de transfert est égale à celle du chemin de transmission de l'onde d'interférence, pour recevoir ledit signal dérivé du signal d'entrée ou du signal de sortie dudit équipement de relais (2) d'onde de diffusion afin de générer ledit signal de réplique correspondant à la composante d'interférence; et
un circuit (17, 21) de réglage de coefficients de dérivation pour régler des coefficients de dérivation dudit filtre adaptatif (28) en traitant les signaux fournis à l'unité (11) de traitement de signaux numériques;

où le dispositif d'annulation (1) d'ondes d'interférence est adapté pour estimer une fonction de transfert globale du système et pour estimer une caractéristique des ondes interférence.

2. Dispositif d'annulation d'ondes d'interférence selon la revendication 1,
dans lequel ledit filtre adaptatif comporte:

un démodulateur (16) en quadrature pour générer un signal de bande de base équivalent en traitant le signal dérivé de la borne d'entrée ou de sortie de l'équipement (2) de relais d'onde de diffusion;
un filtre numérique complexe adaptatif (18) pour recevoir le signal de bande de base dérivé d'un démodulateur (16) en quadrature et générer un signal de bande de base équivalent par un processus de filtrage; et
un modulateur (22) en quadrature pour recevoir ledit signal de bande de base équivalent dérivé dudit filtre numérique complexe adaptatif (18) et générer un signal modulé;

où ledit circuit (17, 21) de réglage de coefficients de dérivation destiné à régler des coefficients de dérivation dudit filtre numérique complexe adaptatif (18) comprend:

un circuit FFT (17) pour générer un signal d'estimation estimant une caractéristique de la composante d'interférence en traitant ledit signal de bande de base équivalent provenant dudit démodulateur (16) en quadrature; et
un circuit DSP (21) pour générer une réponse d'impulsion complexe en traitant le signal d'estimation pour une caractéristique de couplage dérivée dudit circuit FFT (17),

où ledit circuit (17, 21) de réglage de coefficients de dérivation est adapté pour régler les coefficients de dérivation du filtre numérique complexe adaptatif (18) conformément à ladite réponse d'impulsion complexe.

3. Dispositif d'annulation d'ondes d'interférence selon la revendication 2,
dans lequel ledit circuit DSP (21) est adapté pour dériver une différence entre une fonction de transfert d'une boucle d'asservissement pour annuler l'onde d'interférence et une fonction de transfert d'un chemin de transmission d'une interférence effective.

4. Dispositif d'annulation d'ondes d'interférence selon la revendication 2 ou 3, dans lequel ledit signal reçu par la station relais est un signal de diffusion numérique de système BST-OFDM, et ledit circuit (17, 21) de réglage de coefficients de dérivation est construit de sorte que les coefficients de dérivation du filtre numérique complexe adaptatif (18) soient réglés en estimant une fonction de transfert du système de transmission des ondes d'interférence en utilisant le fait que des amplitudes de porteuses du signal TMCC, du signal AC et du signal SP consistant en une onde modulée en BPSK, et du signal CP compris dans le signal BST-OFDM sont constantes.

5. Dispositif d'annulation d'ondes d'interférence selon la revendication 4, dans lequel ledit circuit (17, 21) de réglage de coefficients de dérivation est construit de sorte qu'une estimation approximative de la fonction de transfert d'ondes d'interférence soit d'abord effectuée en utilisant le signal CP, le signal AC ou le signal TMCC compris dans tous les symboles du signal BST-OFDM, et qu'une estimation fine de la fonction de transfert des ondes d'interférence soit ensuite effectuée en utilisant le signal SP qui est transmis à un intervalle de symbole donné, mais est agencé à un intervalle plus fin sur l'axe de fréquence que ledit signal CP, ledit signal AC ou ledit signal TMCC.

6. Dispositif d'annulation d'ondes d'interférence selon la revendication 1, dans lequel ladite unité (11) de traitement de signaux numériques comporte un filtre numérique (28) à coefficients en nombres réels ayant une propriété de bande passante, et un circuit pour régler des coefficients de dérivation (17, 21) du filtre numérique (28) à coefficients en nombres réels.

7. Dispositif d'annulation d'ondes d'interférence selon la revendication 6, dans lequel ledit circuit pour régler les coefficients de dérivation (17, 21) du filtre numérique (28) à coefficients en nombres réels, comporte:

un démodulateur (16) en quadrature pour générer un signal de bande de base équivalent en traitant ledit signal dérivé de la borne d'entrée ou de sortie de l'équipement de relais (2) d'onde de diffusion;
un circuit FFT (17) pour générer un signal d'estimation pour estimer une caractéristique d'ondes d'interférence en traitant ledit signal de bande de base équivalent, et
un circuit DSP (21) pour générer une réponse d'impulsion en traitant ledit signal d'estimation que fournit ledit circuit FFT (17) et représentant la caractéristique des ondes d'interférence,

où des coefficients de dérivation dudit filtre numérique (28) à coefficients en nombres réels sont réglés conformément à ladite réponse d'impulsion.

8. Dispositif d'annulation (1) d'ondes d'interférence selon la revendication 7, dans lequel ledit circuit DSP (21) est adapté pour dériver une différence entre une fonction de transfert d'une boucle d'asservissement pour annuler l'onde d'interférence et une fonction de transfert d'un chemin de transmission d'une interférence effective.

9. Dispositif d'annulation d'ondes d'interférence selon la revendication 6 ou 7 ou 8, dans lequel ledit signal reçu par la station relais est un signal de diffusion numérique d'un système BST-OFDM, et ledit circuit (17, 21) de réglage de coefficients de dérivation est construit de sorte que les coefficients de dérivation du filtre numérique (28) à coefficients en nombres réels soient réglés en estimant une fonction de transfert du système de transmission des ondes d'interférence en utilisant le fait que des amplitudes de porteuses du signal TMCC, du signal AC et du signal SP constitués d'une onde modulée en BPSK, et du signal CP compris dans le signal BST-OFDM sont constantes.

10. Dispositif d'annulation d'ondes d'interférence selon la revendication 9, dans lequel ledit circuit de réglage de coefficients de dérivation est construit de sorte qu'une estimation approximative de la fonction de transfert des ondes d'interférence soit d'abord effectuée en utilisant le signal CP, le signal AC ou le signal TMCC compris dans tous les symboles du signal BST-OFDM, et qu'une estimation fine de la fonction de transfert des ondes d'interférence soit ensuite effectuée en utilisant le signal SP qui est transmis à un intervalle de symbole donné, mais est agencé à un intervalle plus fin sur l'axe de fréquence que ledit signal CP, ledit signal AC ou ledit signal TMCC.

11. Dispositif d'annulation d'ondes d'interférence selon l'une quelconque des revendications 1 à 10, dans lequel chacun desdits filtres numériques adaptatifs comprend deux systèmes de filtres numériques indépendants, ces deux systèmes de filtres numériques adaptatifs sont sélectionnés de manière alternée, des coefficients mis à jour sont chargés dans un système de filtre numérique adaptatif non sélectionné, et les systèmes de filtres numériques adaptatifs sont changés après la disparition d'un signal incorrect provoqué par la mise à jour des coefficients.

12. Dispositif d'annulation d'ondes d'interférence selon la revendication 11, dans lequel le minutage de changement desdits deux systèmes de filtres numériques adaptatifs coïncide avec un intervalle de garde dudit signal BST-OFDM.

## FIG. 1

Desired Wave →  RA

Coupling Loop Interference Wave

TA  Broadcasting Wave →

Received Input →

**1** Interference Wave Canceller → Desired Wave → **2** Broadcasting Wave Relay Equipment → **3** Output Filter → Broadcasting Wave Output → **4** Directional Coupler

Reference Signal

EP 1 087 559 B1

# FIG. 2

Desired Wave → RA

Couling Loop Interference Wave ← TA → Broadcasting Wave

Desired Wave

Received Input →

*1* Interference Wave Canceller

Desired Wave →

*5* Distributer →

*2* Broadcasting Wave Relay Equipment →

*3* Output Filter → Broadcasting Wave Output

Reference Signal

EP 1 087 559 B1

FIG. 3

# FIG. 4

OFDM Segment

| 11 | 9 | 7 | 5 | 3 | 1 | 0 | 2 | 4 | 6 | 8 | 10 | 12 |

→ Frequency

← About 5. 6MHz →

# FIG. 5

EP 1 087 559 B1

# FIG. 6

From Receiving Antenna → [BPF 6] → ... → (+ − 14) → To Broadcasting Wave Relay Equipment

Reference Signal Input → (× 9) → [BPF 10] → [Digital Signal Processing Unit 11] → (× 12) → [BPF 13] →

[Distributor 8]

[Local Oscillator 7]

EP 1 087 559 B1

# FIG. 7

Adaptive Complex Digital 11
Filter Circuit

Quadrature Modulator 22

18

Adaptive Filter

Adaptive Filter

Adaptive Filter

Adaptive Filter

LPF

π/2

LPF

+

Quadrature Demodulator

I axis

Reference Signal Input (IF)

15

A/D

π/2

LPF

LPF

16

Q axis

17

Real Part

FFT Circuit

DSP Circuit

21

Complex Impulse Response

Imaginary Part

20

19

Carrier Regenerating Circuit

Clock Regenerating Circuit

To Respective Circuits

D/A

23

Replica Output of Interference Wave (IF)

EP 1 087 559 B1

# FIG. 8

EP 1 087 559 B1

# FIG. 9

# FIG. 10

**FIG. 11**

**EP 1 087 559 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5691978 A
- EP 0801474 A1
- US 5444864 A